# EUROPÄISCHE PATENTANMELDUNG

(11) **EP 3 546 097 A1**
(43) Veröffentlichungstag der Anmeldung: **02.10.2019**
(21) Anmeldenummer: 19000035.6
(22) Anmeldetag: 21.01.2019
(51) Int. Cl.: B23B 31/20

(54) **SPANNVORRICHTUNG ZUR FIXIERUNG EINES SPANNTEILS**

(30) Priorität: 29.03.2018 DE 102018002624
(71) Anmelder: Neumayer Tekfor Engineering GmbH, 77756 Hausach (DE)
(72) Erfinder: Vogel, Niels, 36205 Sontra (DE); Aschenbrenner, Daniel, 37211 Alheim (DE); Penner, Andreas, 36251 Bad Hersfeld (DE); Trinter, Steffen, 36217 Ronshausen (DE)

(57) **Zusammenfassung**

Die Erfindung bezieht sich auf eine Spannvorrichtung (1) zur Fixierung eines Spannteils (100). Ein Anschlagselement (2) und eine Radialklemmvorrichtung (36) bilden einen Innenraum (4) zur teilweisen Aufnahme des Spannteils (100). Die Radialklemmvorrichtung (36) übt in einem verspannten Zustand eine radiale Fixierungskraft auf das Spannteil (100) aus. Zwischen der Radialklemmvorrichtung (36) und einer sie radial umgebenden Spannbuchse (9) ist ein radialer Abstand (13) gegeben und sind die Spannbuchse (9) und die Radialklemmvorrichtung (36) derartig radial zueinander beweglich, sodass die Radialklemmvorrichtung (36) schwimmend in der Spannbuchse (9) gelagert ist.

## Beschreibung

Die vorliegende Erfindung betrifft eine Spannvorrichtung zur Fixierung eines Spannteils. Das Spannteil ist beispielsweise ein Werkstück, das mechanisch bearbeitet werden soll, während es von der Spannvorrichtung gehalten wird.

Für die mechanische und insbesondere spanabhebende Bearbeitung von Werkstücken (z. B. aus Metall) ist es im Stand der Technik bekannt, eine Relativbewegung zwischen dem Werkstück und einem Werkzeug zu erzeugen. Die Bewegung besteht zumeist darin, dass eine Komponente (also Werkstück oder Werkzeug) um eine Drehachse gedreht wird. Für die Erzeugung der Drehung ist eine entsprechende Drehvorrichtung vorhanden, die mit einer- passenden Spannvorrichtung mechanisch gekoppelt ist, die wiederum die betroffene Komponente festhält.

Wird beispielsweise ein Werkstück mit einer Stirnverzahnung - wie beispielsweise einer Plan-Kerb- oder auch Hirth-Verzahnung - eingespannt, so kann ein Mittenversatz einer Presskontur zu der Stirnverzahnung auftreten. Für diese Problematik ist es bekannt, Schrägbolzenfutter zu verwenden. Diese sind jedoch sehr aufwendig in der Herstellung. Zudem können standardisierte Spannzangen nicht verwendet werden und überdies lassen sich über Schrägbolzen nur geringe Mittenversätze überbrücken. Alternativ lassen sich Backenfutter mit schwimmenden Spannbacken verwenden. Nachteilig daran ist, dass Backenfutter keinen Achszug-Effekt aufweisen. Das Zentrieren der Stirnverzahnung ist nicht sichergestellt. Schließlich weiten sich bei hohen Drehzahlen die Spannbacken auf, sodass die Spannkraft reduziert wird.

Der DE 10 2006 048 447 A1 lässt sich eine Spannvorrichtung entnehmen, die der Lagerung eines Prüflings dient. Der Prüfling wird radial von einer Spannzange aufgenommen und stößt stirnseitig an einen Anschlagdorn an. Die Spannzange selbst wird von einem Zentrierring gehalten und ist schwimmend in einem Grundkörper gelagert. Details zu der schwimmenden Lagerung sind dabei nicht in der Schrift genannt.

Die der Erfindung zugrundeliegende Aufgabe besteht darin, eine Spannvorrichtung zur Fixierung eines Spannteils vorzuschlagen, die insbesondere in dem Fall, dass das Spannteil eine Stirnverzahnung aufweist, für einen Ausgleich eines Mittenversatzes sorgt, und die die Nachteile des Standes der Technik vermeidet.

Die Erfindung löst die Aufgabe durch eine Spannvorrichtung zur Fixierung eines Spannteils, wobei die Spannvorrichtung mit einer Drehvorrichtung verbindbar ist, wobei die Spannvorrichtung über ein Anschlagselement verfügt, wobei das Anschlagselement und eine Radialklemmvorrichtung einen Innenraum zur teilweisen Aufnahme des Spannteils bilden, wobei die Radialklemmvorrichtung in einem verspannten Zustand eine radiale Fixierungskraft auf das Spannteil ausübt, wobei die Radialklemmvorrichtung radial von einer Spannbuchse umgeben ist, und wobei zwischen der Spannbuchse und der Radialklemmvorrichtung ein radialer Abstand befindlich ist und die Spannbuchse und die Radialklemmvorrichtung derartig radial zueinander beweglich sind, sodass die Radialklemmvorrichtung schwimmend in der Spannbuchse gelagert ist.

Die Spannvorrichtung übt auf das Spannteil in dem verspannten Zustand (also wenn die Spannvorrichtung das Spannteil hält) eine radiale Kraft aus. Dies geschieht über die Radialklemmvorrichtung. Dabei ist die Radialklemmvorrichtung mit einem radialen Abstand durch die sie umgebende Spannbuchse versehen. Zudem sind die Spannbuchse und die Radialklemmvorrichtung radial zueinander beweglich. Beide vorangehende Eigenschaften bewirken, dass eine radiale Verschiebung der Radialklemmvorrichtung und damit auch des Spannteils möglich ist. Gegen das Anschlagselement stößt das Spannteil an, wenn es sich in dem Innenraum befindet und in der Spannvorrichtung fixiert ist. Durch den radialen Abstand ist somit ein Spalt zwischen Spannbuchse und Radialklemmvorrichtung gegeben. Der Spalt erlaubt z. B. einen Ausgleich eines Mittenversatzes des Bauteils zur Drehachse der Drehvorrichtung.

In einer Ausgestaltung ist der radiale Abstand - zumindest im Mittel oder generell - kleiner als 1 mm. In einer weiteren Ausgestaltung liegt der radiale Abstand zwischen 0,25 mm und 0,75 mm. In einer weiteren Ausgestaltung beträgt der radiale Abstand 0,5 mm.

Eine Ausgestaltung besteht darin, dass das Anschlagselement eine Verzahnung aufweist, die eine Gegenverzahnung zu einer Stirnverzahnung des Spannteils ist. Eine solche Verzahnung im Anschlagselement bewirkt eine Sicherung gegenüber einem Verdrehen des Spannteils, da die Verzahnungen entsprechend ineinandergreifen.

Eine Ausgestaltung sieht vor, dass das Anschlagselement eine Gegenverzahnung zu einer Hirth-Verzahnung (eine alternative Bezeichnung ist Plan-Kerb-Verzahnung) aufweist.

Eine Ausgestaltung besteht darin, dass eine Spannzange und ein die Spannzange radial umgebender Spannring die Radialklemmvorrichtung bilden, und dass die Spannzange eine keilförmige Außenseite und der Spannring eine zu der keilförmigen Außenseite der Spannzange korrespondierende keilförmige Innenseite aufweist.

Eine Ausgestaltung sieht vor, dass der Spannring stirnseitig auf einen Absatz mündet, in den ein Endbereich der Spannbuchse eingreift. Der Spannring wird somit in dieser Ausgestaltung nicht nur vor der Spannbuchse radial umgeben, sondern die Spannbuchse bildet teilweise auch den axialen bzw. stirnseitigen Abschluss für den Spannring. Der Absatz ergibt sich dadurch, dass der Spannring abschnittsweise unterschiedliche axiale Erstreckungen aufweist. Der Absatz befindet sich dabei in einer Ausgestaltung insbesondere in der radialen Außenseite des Spannrings.

Eine Ausgestaltung besteht darin, dass die Spannbuchse und die Radialklemmvorrichtung frei von einer radialen und/oder axialen Fixierung zueinander sind. In einer Ausgestaltung sind die Spannbuchse und die Radialklemmvorrichtung nur ineinandergesteckt, sodass hierdurch ebenfalls keine Fixierung zwischen beiden resultiert. Der Mangel an der radialen Fixierung erlaubt es, dass die Radialklemmvorrichtung sich radial relativ zu der Spannbuchse bewegen und somit Abweichungen des Spannteils ausgleichen kann. Dies ergibt insgesamt eine schwimmende Lagerung der Radialklemmvorrichtung. Die schwimmende Lagerung bezieht sich dabei zumindest auf die radiale (also senkrecht zur Längsachse der Spannvorrichtung) Beweglichkeit der Radialklemmvorrichtung relativ zur Spannbuchse. In einer Erweiterung bezieht sich dies auch auf die axiale Beweglichkeit.

Eine Ausgestaltung sieht vor, dass ein Dichtelement vorhanden ist, welches einen stirnseitigen Zugang zu dem radialen Abstand verschließt. Der stirnseitige Zugang bezieht sich in einer Ausgestaltung insbesondere auf die Stirnseite der Spannvorrichtung. Das Dichtelement verhindert beispielsweise das Eindringen von Wasser oder Staub.

Eine Ausgestaltung besteht darin, dass die Spannbuchse - vorzugsweise über eine Schraube - mit einem Grundkörper der Spannvorrichtung verbunden ist, und dass der Grundkörper einer Verbindung der Spannvorrichtung mit der Drehvorrichtung dient. In einer Ausgestaltung bilden der Grundkörper und die Spannbuchse gemeinsam eine Art von Becher, in welcher die Radialklemmvorrichtung eingebracht ist. Dabei ist vor allem die radiale Beweglichkeit der Radialklemmvorrichtung bedeutend.

In einer weiteren Ausgestaltung ist der Grundkörper mit einer Verbindungsvorrichtung kontaktiert, die ein Zugrohr und ein Kugelgelenk aufweist. Der Grundkörper der Spannvorrichtung lässt in dieser Ausgestaltung über die Art von Kugelgelenk eine weitere Korrektur in Bezug auf axiale oder radiale Abweichungen zwischen einzelnen Komponenten zu. Der Grundkörper ist damit mittelbar mit der Drehvorrichtung verbunden.

Eine Ausgestaltung sieht vor, dass die Spannbuchse - insbesondere über eine Schraube - nur axial parallel zu einer Längsachse der Spannvorrichtung mit dem Grundkörper verbunden ist.

Eine weitere Ausgestaltung beinhaltet, dass mindestens ein Mediumsführungskanal vorhanden ist, der auf den Innenraum mündet. In einer Ausgestaltung befindet sich der Mediumsführungskanal in dem Anschlagselement und endet in einer zusätzlichen oder alternativen Ausgestaltung im Bereich der Verzahnung des Anschlagselements. Der Mediumsführungskanal wird in einer Variante für eine Luftanlagekontrolle verwendet, um zu überprüfen, ob das Spannteil sicher an der Verzahnung anliegt. Alternativ zur Luftanlagekontrolle lässt sich der Mediumsführungskanal als Leitung für andere Medien außer Luft verwenden. So wird beispielsweise in einer Anwendung ein Kühlmittel zu dem Spannteil geführt. Dies erlaubt in einer Anwendung, das Spannteil und das Anschlagselement von Spänen zu reinigen.

Im Einzelnen gibt es eine Vielzahl von Möglichkeiten, die erfindungsgemäße Spannvorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: einen Schnitt durch eine Spannvorrichtung mit einem ersten eingespannten Spannteil,
- Fig. 2: einen Ausschnitt der Spannvorrichtung der Fig. 1 ohne das Spannteil und
- Fig. 3: einen Schnitt durch eine Spannvorrichtung mit einem zweiten Spannteil.

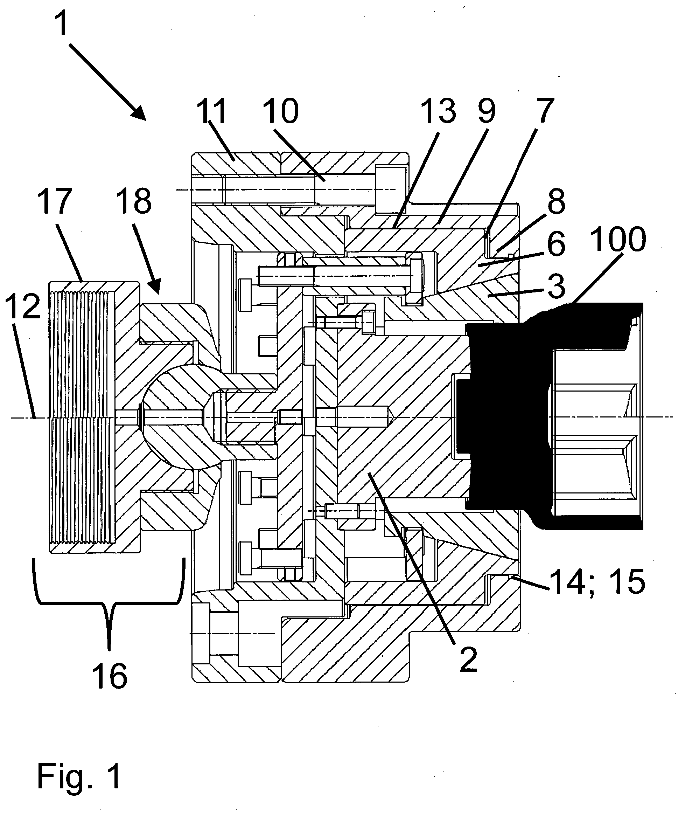

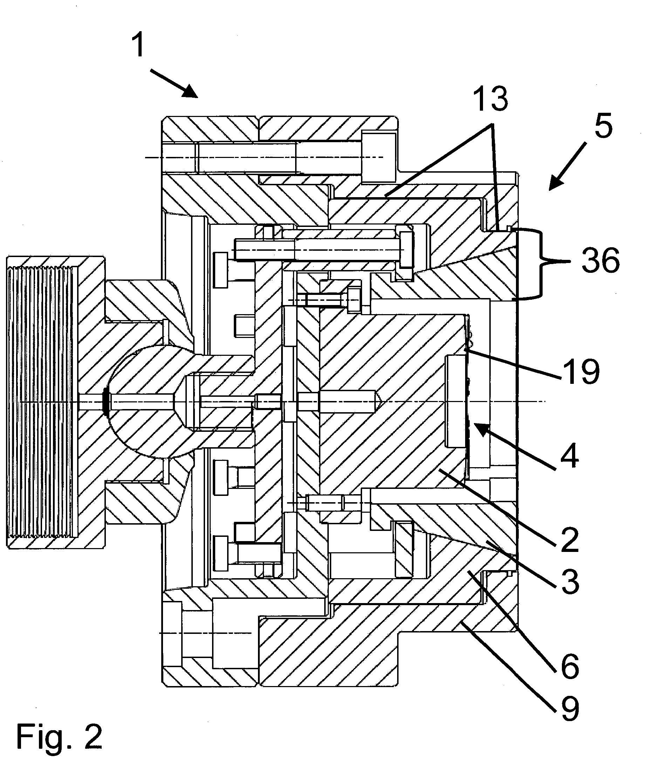

Die Fig. 1 zeigt den Zustand, in dem ein erstes Spannteil 100 in einer Spannvorrichtung 1 eingespannt ist. Beschrieben wird somit auch ein Spannzangenfutter. Die zugehörige Fig. 2 zeigt die gleiche Spannvorrichtung 1, jedoch ohne das Spannteil 100. Daher werden beide Abbildungen Fig. 1 und 2 zusammen besprochen.

Das Spannteil 100 ist hier beispielsweise ein Werkstück, das über eine Hirth-Verzahnung verfügt und mechanisch bearbeitet werden soll. Für die Bearbeitung ist das Spannteil 100 eingespannt und wird von einer - hier nicht dargestellten - Drehvorrichtung um eine Achse gedreht. Die Einspannung erfolgt hier insbesondere über eine radiale Kraft, die auf das Spannteil 100 im gespannten Zustand ausgeübt wird und es damit festhält.

Die Spannvorrichtung 1 verfügt über ein Anschlagselement 2, gegen welches das Spannteil 100 anstößt. Umgeben ist das Anschlagselement 2 radial von einer Spannzange 3. Das Anschlagselement 2 und die Spannzange 3 sind dabei so ausgestaltet und relativ zueinander angeordnet, dass sich ein freier Innenraum 4 (siehe Fig. 2) an der Stirnseite 5 der Spannvorrichtung 1 ergibt. Dieser Innenraum 4 nimmt (wie in Fig. 1 dargestellt) eine Stirnseite des Spannteils 100 auf. Weitere Details hierzu sind in Verbindung mit der Fig. 2 zu sehen.

Die Spannzange 3 ist radial von einem Spannring 6 umgeben.

Die Spannzange 3 verfügt über eine keilförmige Außenseite und der Spannring 6 verfügt über eine keilförmige Innenseite. Die beiden Keilformen sind dabei so aufeinander abgestimmt bzw. korrespondieren derart miteinander, dass sich eine möglichst gute Kontaktfläche zwischen den beiden Komponenten 3, 6 ergibt und dass im gespannten Zustand die Spannzange 3 die angesprochene radiale Kraft auf das Spannteil 100 ausübt. Somit bilden die Spannzange 3 und der Spannring 6 insgesamt eine Radialklemmvorrichtung 36 (siehe Fig. 2) zur Erzeugung der radialen Fixierungskraft für das Spannteil 100.

Auf seiner Außenseite endet der Spannring 6 stirnseitig mit einem Absatz 7, in den ein Endbereich 8 der Spannbuchse 9 eingreift. Die Spannbuchse 9 umgreift somit radial die Radialklemmvorrichtung 36 und hier insbesondere auch den außen gelegenen Spannring 6.

Die Spannbuchse 9 selbst ist über eine Schraube 10 mit einem Grundkörper 11 der Spannvorrichtung 1 verbunden.

Die Längsachse 12 der Spannvorrichtung 1 ist in der gezeigten Ausgestaltung auch die Längsachse des Spannteils 100 und ist die Achse, um die die Drehung durch die - hier nicht dargestellte - Drehvorrichtung stattfindet. Wie zu sehen, besteht eine geringe Spannhubbegrenzung als Abstand in axialer Richtung zwischen dem Spannring 6 und der Spannbuchse 9.

Zwischen der Spannbuchse 9 und dem Spannring 6 gibt es keine radiale Fixierung. Die Spannbuchse 9 und der Spannring 6 sind nur ineinandergesteckt und nicht miteinander verbunden. Somit wird die radiale Beweglichkeit für den Ausgleich des Mittenversatzes ermöglicht.

Es besteht ein radialer Abstand 13 - hier beispielhaft als Luftspalt - zwischen der Spannbuchse 9 und dem Spannring 6. Damit in diesen Spalt keine Verschmutzung eindringen kann, ist stirnseitig ein Dichtelement 14 (hier in Form eines O-Rings) in einer Aussparung 15 (hier beispielhaft in der Spannbuchse 9) vorgesehen.

Der radiale Abstand 13 zwischen dem Spannring 6 und der umgebenden Spannbuchse 9 und somit zwischen der Radialklemmvorrichtung 36 und der Spannbuchse 9 bewirkt die schwimmende Lagerung der Radialklemmvorrichtung 36. Die schwimmende Lagerung erlaubt es, dass ein Mittenversatz zur Verzahnung des jeweiligen Spannteils 100 ausgeglichen werden kann.

An den Grundkörper 11 grenzt eine Verbindungsvorrichtung 16 an, die eine Verbindung mit der - hier nicht dargestellten - Drehvorrichtung erlaubt. Die Verbindungsvorrichtung 16 weist in der gezeigten Ausgestaltung ein Zugrohr 17 und ein Kugelgelenk 18 auf. Die Gelenkverbindung erlaubt den Ausgleich von Achsfehlern der Spindel.

Zu erkennen ist insbesondere in der Fig. 2, wie das Anschlagselement 2 und die Spannzange 3 einen Innenraum 4 in der Stirnseite 5 der Spannvorrichtung 1 umfassen und bilden.

Weiterhin ist zu erkennen, dass das Anschlagselement 2 über eine Verzahnung 19 verfügt. Diese Verzahnung 19 ist insbesondere eine Gegenverzahnung (oder allgemein korrespondierende Verzahnung) zu der Verzahnung, die das Spannteil 100 aufweist. Die Verzahnung 19 bewirkt eine Fixierung gegenüber einem Verdrehen des Spannteils 100. Zudem zentriert sich so die Verzahnung des Spannteils 100 selbst. Der radiale Ausgleich der Radialklemmvorrichtung 36 erfolgt über den Abstand 13 sowie über die radiale Unverbundenheit mit der radial umgebenden Spannbuchse 9.

Die Zugehörigkeit der Verzahnung 19 zu dem jeweiligen Spannteil 100 bedingt, dass in Abhängigkeit von der Art der Verzahnung jeder Spannteil-Typ ein eigenes Anschlagselement 2 erforderlich macht. Weiterhin bedingt der Außendurchmesser des Spannteils 100 jeweils eine andere Spannzange 3.

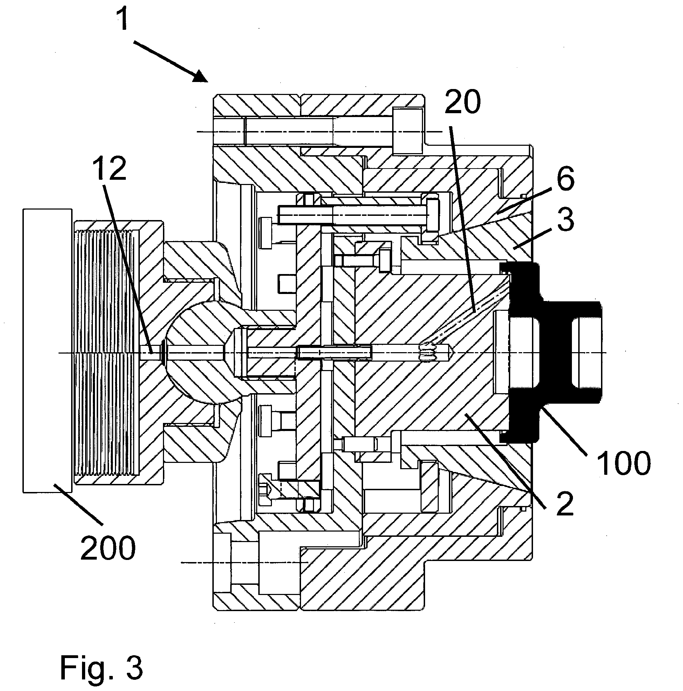

In der Fig. 3 ist der Fall eines zweiten, alternativen Spannteils 100 dargestellt.

Die Spannvorrichtungen 1 der Ausgestaltungen der Fig. 1 und Fig. 3 unterscheiden sich nur in Bezug auf das Anschlagselement 2 und die Spannzange 3 voneinander. Damit ergibt sich auch der Vorteil, dass beim Wechsel zwischen unterschiedlichen Spannteilen 100 lediglich zwei Komponenten der Spannvorrichtung 1 geändert werden müssen. Da die Spannzangen 3 jeweils über die gleiche Außenkontur und insbesondere über die gleiche Keilform verfügen, lassen sie sich jeweils mit dem gleichen Spannring 6 kombinieren.

In der Fig. 3 ist zudem schematisch die Drehvorrichtung 200 angedeutet, die die Drehung der Spannvorrichtung 1 um die Längsachse 12 bewirkt.

Hinter der Stirnseite des Anschlagselements 2 mit der Verzahnung 19 verläuft ein Mediumsführungskanal 20, um Medien - z. B. Luft für eine Luftanschlagsprüfung - in den Innenraum 4 zuführen. Alternativ lässt sich ein Kühlmittel heranführen, um z. B. auch den Innenraum 4 von Spänen zu säubern.

## Patentansprüche

1. Spannvorrichtung (1) zur Fixierung eines Spannteils (100),
wobei die Spannvorrichtung (1) mit einer Drehvorrichtung (200) verbindbar ist,
wobei die Spannvorrichtung (1) über ein Anschlagselement (2) verfügt,
wobei das Anschlagselement (2) und eine Radialklemmvorrichtung (36) einen Innenraum (4) zur teilweisen Aufnahme des Spannteils (100) bilden,
wobei die Radialklemmvorrichtung (36) in einem verspannten Zustand eine radiale Fixierungskraft auf das Spannteil (100) ausübt,
wobei die Radialklemmvorrichtung (36) radial von einer Spannbuchse (9) umgeben ist, und
wobei zwischen der Spannbuchse (9) und der Radialklemmvorrichtung (36) ein radialer Abstand (13) befindlich ist und die Spannbuchse (9) und die Radialklemmvorrichtung (36) derartig radial zueinander beweglich sind, sodass die Radialklemmvorrichtung (36) schwimmend in der Spannbuchse (9) gelagert ist.

2. Spannvorrichtung (1) nach Anspruch 1,
wobei das Anschlagselement (2) eine Verzahnung (19) aufweist, die eine Gegenverzahnung zu einer Stirnverzahnung des Spannteils (100) ist.

3. Spannvorrichtung (1) nach Anspruch 1 oder 2,
wobei das Anschlagselement (2) eine Gegenverzahnung zu einer Hirth-Verzahnung aufweist.

4. Spannvorrichtung (1) nach einem der Ansprüche 1 bis 3,
wobei eine Spannzange (3) und ein die Spannzange (3) radial umgebender Spannring (6) die Radialklemmvorrichtung (36) bilden, und
wobei die Spannzange (3) eine keilförmige Außenseite und der Spannring (6) eine zu der keilförmigen Außenseite der Spannzange (3) korrespondierende keilförmige Innenseite aufweist.

5. Spannvorrichtung (1) nach Anspruch 4,
wobei der Spannring (6) stirnseitig auf einen Absatz (7) mündet, in den ein Endbereich (8) der Spannbuchse (9) eingreift.

6. Spannvorrichtung (1) nach einem der Ansprüche 1 bis 5,
wobei die Spannbuchse (9) und die Radialklemmvorrichtung (36) frei von einer radialen und/oder axialen Fixierung zueinander sind.

7. Spannvorrichtung (1) nach einem der Ansprüche 1 bis 5,
wobei die Spannbuchse (9) und die Radialklemmvorrichtung (36) nur ineinandergesteckt sind.

8. Spannvorrichtung (1) nach einem der Ansprüche 1 bis 7,
wobei ein Dichtelement (14) vorhanden ist, welches einen stirnseitigen Zugang zu dem radialen Abstand (13) verschließt.

9. Spannvorrichtung (1) nach einem der Ansprüche 1 bis 8,
wobei die Spannbuchse (9) mit einem Grundkörper (11) der Spannvorrichtung (1) verbunden ist, und
wobei der Grundkörper (11) einer Verbindung der Spannvorrichtung (1) mit der Drehvorrichtung (200) dient.

10. Spannvorrichtung (1) nach Anspruch 9,
wobei der Grundkörper (11) mit einer Verbindungsvorrichtung (16) kontaktiert ist, die ein Zugrohr (17) und ein Kugelgelenk (18) aufweist.

11. Spannvorrichtung (1) nach einem der Ansprüche 1 bis 10,
wobei mindestens ein Mediumsführungskanal (20) vorhanden ist, der auf den Innenraum (4) mündet.
